# EUROPEAN PATENT APPLICATION

(11) **EP 3 905 477 A1**
(43) Date of publication of application: **03.11.2021**
(21) Application number: 20758812.0
(22) Date of filing: 19.02.2020
(51) Int. Cl.: H02J 7/00

(54) **DISCHARGING CIRCUIT AND ELECTRONIC DEVICE**

(30) Priority: 23.02.2019 CN 201910135723
(71) Applicant: Huawei Technologies Co., Ltd., Longgang District, Shenzhen, Guangdong 518129, (CN)
(72) Inventor: WANG, Hui, Shenzhen, Guangdong 518129 (CN); ZHENG, Zhiyong, Shenzhen, Guangdong 518129 (CN)
(74) Representative: Maiwald Patent- und Rechtsanwaltsgesellschaft mbH
(86) International application number: PCT/CN2020/075784
(87) International publication number: WO 2020/169037

(57) **Abstract**

This application discloses a discharge circuit and an electronic device including the discharge circuit. The discharge circuit includes a detection circuit (101), a buck circuit (102), a charge pump circuit (103), and a control circuit (104). The detection circuit detects a voltage of a first port of the detection circuit. If the voltage of the first port of the detection circuit is greater than a first threshold, the control circuit controls the charge pump circuit to discharge. If the voltage of the first port of the detection circuit is less than a second threshold, the control circuit controls the buck circuit to discharge. Embodiments of this application can be used to help improve discharge efficiency of a battery, so that battery power can be fully utilized.

## Description

This application claims priority to Chinese Patent Application No. 201910135723.5, filed with the China National Intellectual Property Administration on February 23, 2019 and entitled "DISCHARGE CIRCUIT AND ELECTRONIC DEVICE", which is incorporated herein by reference in its entirety.

### TECHNICAL FIELD

This application relates to the field of integrated circuits, and in particular, to a discharge circuit and an electronic device.

### BACKGROUND

As consumer electronics such as mobile phones require an increasingly high charging speed, a series battery solution is to be gradually used by manufacturers because of an advantage of low charging heat. Currently, a withstand voltage range of chips of mobile phone electronics matches a voltage of a single-cell lithium battery, and is generally < 5.5 V (a maximum voltage of the lithium battery is generally about 4.4 V). If a dual-cell series battery solution is used, a maximum output voltage of a battery is about 8.8 V. The voltage range exceeds the current withstand voltage range of the chips. Therefore, the voltage needs to be reduced for use. There is a plurality of voltage reduction modes. For example, a buck circuit is used to reduce the voltage. This has an advantage of a constant output voltage, but efficiency is low. Alternatively, a charge pump circuit (Charge Pump) chip is used to reduce the voltage. This has an advantage of high efficiency, and a disadvantage is that an output voltage varies with an input voltage, and battery power cannot be fully utilized.

### SUMMARY

Embodiments of this application provide a discharge circuit, to help improve discharge efficiency of a battery, so that battery power can be fully utilized.

According to a first aspect, an embodiment of this application provides a discharge circuit. The discharge circuit is used inside an electronic device to supply power to a load circuit inside the electronic device, and includes a detection circuit, a buck circuit, a charge pump circuit, and a control circuit.

An input port of the buck circuit is coupled to an input port of the charge pump circuit, and the input port of the buck circuit and the input port of the charge pump circuit are an input port of the discharge circuit. An output port of the charge pump circuit is coupled to an output port of the buck circuit, and the output port of the charge pump circuit and the output port of the buck circuit are an output port of the discharge circuit. The output port of the discharge circuit is coupled to an input port of the load circuit inside the electronic device. A first port of the detection circuit is coupled to the input port of the discharge circuit, a second port of the detection circuit is coupled to a first port of the control circuit, and a second port and a third port of the control circuit are respectively coupled to an enabling port of the buck circuit and an enabling port of the charge pump circuit. The detection circuit is configured to detect a voltage of the first port of the detection circuit. The control circuit is configured to control, based on the voltage of the first port of the detection circuit, the buck circuit and the charge pump circuit to discharge.

When a voltage of the input port of the discharge circuit is high, the charge pump circuit is used to discharge, to help improve discharge efficiency of a battery. When the voltage of the input port of the discharge circuit is not high, the buck circuit is used to discharge, so that battery power can be fully utilized. Both the discharge efficiency and utilization of the battery are considered.

In a feasible embodiment, that the control circuit controls, based on the voltage of the first port of the detection circuit, the buck circuit and the charge pump circuit to discharge includes: If the voltage of the first port of the detection circuit is greater than a first threshold, the control circuit controls the charge pump circuit to discharge; and if the voltage of the first port of the detection circuit is less than a second threshold, the control circuit controls the buck circuit to discharge. The first threshold is greater than or equal to the second threshold.

In a feasible embodiment, the electronic device further includes a battery, a negative electrode of the battery is coupled to ground, and a positive electrode of the battery is coupled to the input port of the discharge circuit. The control circuit further determines a switching voltage V based on a voltage of the battery and a status of the battery. If the switching voltage V is greater than a third threshold, the control circuit controls the charge pump circuit to discharge. If the switching voltage V is less than a fourth threshold, the control circuit controls the buck circuit to discharge. The third threshold is greater than or equal to the fourth threshold.

In a feasible embodiment, the switching voltage V is V=Vbat-I*η*R(T), where Vbat is the voltage of the battery, R(T) is internal resistance of the battery, T is a temperature of the battery, η is an aging degree of the battery, and I is a current of the load circuit.

In a feasible embodiment, the electronic device further includes the battery and a charging circuit. The first port of the detection circuit is coupled to the positive electrode of the battery or a first output port of the charging circuit. The negative electrode of the battery is coupled to the ground, and the positive electrode of the battery is coupled to a second output port of the charging circuit.

In a feasible embodiment, the buck circuit and the charge pump circuit are integrated.

In a feasible embodiment, the buck circuit and the charge pump circuit are integrated and include a first switch, a second switch, a third switch, a fourth switch, a seventh switch, an inductor, an external capacitor, and an output capacitor. A first port of the first switch is the input port of the charge pump circuit and the input port of the buck circuit, a second port of the first switch is coupled to a first port of the second switch, a second port of the second switch is coupled to a first port of the third switch, a second port of the third switch is coupled to a first port of the fourth switch, and a second port of the fourth switch is coupled to the ground. A first port of the external capacitor is coupled to the first port of the second switch, and a second port of the external capacitor is coupled to the second port of the third switch. A first port of the inductor is coupled to the first port of the third switch, a second port of the inductor is coupled to a first port of the output capacitor, and a second port of the output capacitor is coupled to the ground. A first port of the seventh switch is coupled to the first port of the inductor, and a second port of the seventh switch is coupled to the second port of the inductor. The first port of the output capacitor is the output port of the charge pump circuit and the output port of the circuit. This integration mode can reduce a quantity of switches and simplify the circuit.

According to a second aspect, an embodiment of this application provides another discharge circuit, including a buck chip and a charge pump chip. An input port of the buck chip is coupled to an input port of the charge pump chip, an output port of the buck chip is coupled to an output port of the charge pump chip, the input port of the buck chip is an input port of the discharge circuit, and the output port of the buck chip is an output port of the discharge circuit.

Both the buck chip and the charge pump chip detect an output voltage of the output port of the discharge circuit. When the buck chip works, if a voltage to be output by the charge pump chip is greater than the output voltage of the output port of the discharge circuit, the charge pump chip discharges, and when the buck chip detects that the output voltage of the output port of the discharge circuit is greater than a configured voltage of the buck chip, the buck chip enters a low power state. When the charge pump chip works, if the output voltage of the output port of the discharge circuit is less than the configured voltage of the buck chip, the buck chip discharges, and when the charge pump chip detects that the output voltage of the output port of the discharge circuit is greater than an output voltage of the charge pump chip, the charge pump chip enters a low power state.

One of the buck chip and the charge pump chip that has a higher output voltage is used to supply power to a load circuit connected to the output port, so that both discharge efficiency and utilization of a battery are considered.

In a feasible embodiment, the buck chip includes a voltage configuration circuit, a first logic control circuit, a first voltage detection circuit, and a first converting circuit. The charge pump chip includes a second logic control circuit, a second voltage detection circuit, and a second converting circuit. The voltage configuration circuit is configured to set the configured voltage of the buck chip.

The first voltage detection circuit and the second voltage detection circuit are separately configured to detect the output voltage of the discharge circuit.

When the second converting circuit works, if the first logic control circuit determines that the configured voltage is greater than the output voltage of the discharge circuit, the first logic control circuit controls the first converting circuit to work, and if the second logic control circuit determines that an output voltage of the second converting circuit is less than the output voltage of the discharge circuit, the second logic control circuit controls the second converting circuit to stop voltage conversion.

When the first converting circuit works, if the second logic control circuit determines that a voltage that can be output by the second converting circuit is greater than the output voltage of the discharge circuit, the second logic control circuit controls the second converting circuit to work, and if the first logic control circuit determines that the output voltage of the discharge circuit is greater than the configured voltage, the first logic control circuit controls the first converting circuit to stop voltage conversion.

In a feasible embodiment, the first converting circuit and the second converting circuit are integrated and include a first switch, a second switch, a third switch, a fourth switch, a seventh switch, an inductor, an external capacitor, and an output capacitor. A first port of the first switch is the input port of the charge pump circuit and the input port of the buck circuit, a second port of the first switch is coupled to a first port of the second switch, a second port of the second switch is coupled to a first port of the third switch, a second port of the third switch is coupled to a first port of the fourth switch, and a second port of the fourth switch is coupled to ground. A first port of the external capacitor is coupled to the first port of the second switch, and a second port of the external capacitor is coupled to the second port of the third switch. A first port of the inductor is coupled to the first port of the third switch, a second port of the inductor is coupled to a first port of the output capacitor, and a second port of the output capacitor is coupled to the ground. A first port of the seventh switch is coupled to the first port of the inductor, and a second port of the seventh switch is coupled to the second port of the inductor. The first port of the output capacitor is the output port of the charge pump circuit and the output port of the circuit. This integration mode can reduce a quantity of switches and simplify the circuit.

According to a third aspect, an embodiment of this application provides an electronic device, including a load circuit and the discharge circuit in the first aspect or the second aspect.

It can be learned that the discharge circuit used in the embodiments of this application combines advantages of the buck circuit (or the buck chip) and the charge pump circuit (or the charge pump chip), and fully and efficiently utilizes energy of the battery.

These or other aspects of this application are more concise and easier to understand in the description of the following embodiments.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show some embodiments of this application, and a person of ordinary skill in the art may still derive other drawings from these accompanying drawings without creative efforts.
FIG. 1a is a schematic diagram of a discharge circuit according to an embodiment of this application;
FIG. 1b is a schematic diagram of another discharge circuit according to an embodiment of this application;
FIG. 2 is a schematic diagram of another discharge circuit according to an embodiment of this application;
FIG. 3 is a schematic circuit diagram of a charge pump circuit according to an embodiment of this application;
FIG. 4 is a schematic circuit diagram of a buck circuit according to an embodiment of this application;
FIG. 5 is a schematic diagram of an integrated circuit of a charge pump circuit and a buck circuit according to an embodiment of this application;
FIG. 6 is a schematic circuit diagram of another charge pump circuit according to an embodiment of this application;
FIG. 7 is a schematic circuit diagram of another buck circuit according to an embodiment of this application;
FIG. 8 is a schematic diagram of another integrated circuit of a charge pump circuit and a buck circuit according to an embodiment of this application; and
FIG. 9 is a schematic structural diagram of an electronic device according to an embodiment of this application.

### DESCRIPTION OF EMBODIMENTS

The following describes the embodiments of this application with reference to accompanying drawings.

An electronic device uses a dual-cell series battery solution, and a maximum output voltage of a battery is about 8.8 V. The voltage range exceeds a current withstand voltage range of chips. Therefore, the voltage needs to be reduced for use. The embodiments of this application provide a discharge circuit, configured to reduce a supply voltage to a range required by a chip inside the electronic device.

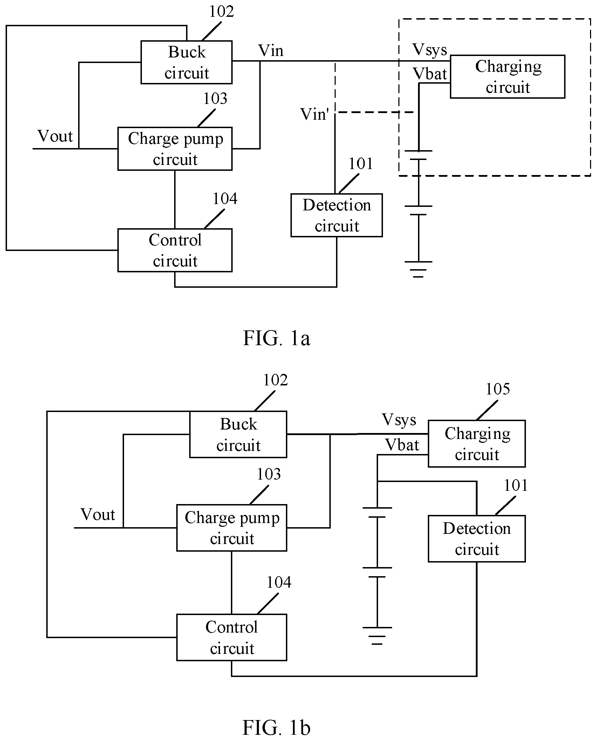

FIG. 1a is a schematic circuit diagram of a discharge circuit according to an embodiment of this application. The discharge circuit is applied to an electronic device. As shown in FIG. 1a, the discharge circuit includes a detection circuit 101, a buck circuit 102, a charge pump circuit 103, and a control circuit 104. An input port of the buck circuit 102 and an input port of the charge pump circuit are coupled to an input port of the discharge circuit, and a voltage of the input port of the discharge circuit is Vin. An output port of the charge pump circuit 103 and an output port of the buck circuit 102 are an output port of the discharge circuit, and a voltage of the output port is Vout. The discharge circuit supplies power to an internal circuit (that is, a load circuit) of the electronic device by using the output port.

Understandably, the electronic device may be a portable electronic device, such as a mobile phone, a tablet computer, a wearable device (such as a smartwatch), or a vehicle-mounted device.

As shown in FIG. 1a, the electronic device has a charging circuit, and the charging circuit has a first output port and a second output port. The first output port of the charging circuit is coupled to a positive electrode of a battery, and an input port of the discharge circuit may be coupled to the second output port of the charging circuit of the electronic device. When the charging circuit is connected to an external charger for charging, the external charger supplies an input voltage to the discharge circuit, or the external charger and the battery supply an input voltage to the discharge circuit. When the charging circuit is not connected to an external charger, the battery supplies an input voltage. In this case, the input port of the discharge circuit may be directly coupled to the positive electrode of the battery, or may be coupled to the positive electrode of the battery by using a partial circuit (such as a switch) of the charging circuit. Output voltages of the two output ports of the charging circuit are the same or close. Therefore, when the charging circuit or the battery supplies the input voltage of the discharge circuit, the input voltage Vin of the input port of the discharge circuit is equal to or close to a voltage of the battery. If a first port of the detection circuit 101 is directly coupled to the input port of the discharge circuit, a voltage Vin' detected by the detection circuit is equal to Vin, and Vin' is equal to or close to the voltage Vbat of the battery. If the first port of the detection circuit 101 is directly coupled to the first output port of the charging circuit, that is, the positive electrode of the battery, the voltage

Vin' detected by the detection circuit is equal to the voltage Vbat of the battery.

In this embodiment of this application, the first port of the detection circuit being directly coupled to the input port of the discharge circuit or the positive electrode of the battery may be considered as the first port of the detection circuit being coupled to the input port of the discharge circuit.

The input port of the discharge circuit may alternatively be directly coupled to the positive electrode of the battery, and a negative electrode of the battery is coupled to ground. (Not shown in the figure) The first port of the detection circuit 101 is directly coupled to the input port of the discharge circuit, and the voltage Vin' detected by the detection circuit is equal to Vin, that is, equal to the voltage Vbat of the battery.

The battery may use a dual-cell series battery solution, that is, two lithium batteries are connected in series to form the battery.

The first port of the detection circuit 101 is directly coupled to the input port of the discharge circuit or the positive electrode of the battery, to detect the voltage of the input port of the discharge circuit or the voltage of the battery. The detection circuit 101 may be an ADC detection circuit. Therefore, based on an object to which the first port of the detection circuit 101 is coupled, the voltage Vin' detected by the detection circuit 101 is equal to or close to Vin, or Vin' is equal to or close to the voltage of the battery. A second port of the detection circuit 101 is coupled to a first port of the control circuit 104, so that the control circuit 104 obtains the detected voltage. A second port and a third port of the control circuit 104 are respectively coupled to an enabling port of the buck circuit 102 and an enabling port of the charge pump circuit 103. The control circuit 104 controls, based on Vin', the buck circuit 102 and the charge pump circuit 103 to discharge.

It should be noted herein that the discharge circuit supplies power to the internal circuit (that is, the load circuit) of the electronic device by specifically connecting the buck circuit 102 and the charge pump (Charge Pump) circuit 103 in parallel.

In a feasible embodiment, that the control circuit 104 controls, based on the voltage Vin' detected by the detection circuit 101, the buck circuit 102 and the charge pump circuit 103 to discharge includes:

If Vin' is greater than a first threshold, the control circuit 104 controls the charge pump circuit 103 to discharge. If Vin' is less than a second threshold, the control circuit 104 controls the buck circuit 102 to discharge. The first threshold is greater than or equal to the second threshold.

Specifically, during initialization (for example, first startup), if Vin' is greater than the first threshold Vth1, the third port of the control circuit 104 generates an enable signal, to control the charge pump circuit 103 to supply power to the load circuit. That is, the control circuit 104 uses the charge pump circuit 103 to supply power to the load circuit, and the buck circuit 102 does not supply power to the load circuit. In this way, supplying power to the load circuit is ensured to be in a high efficiency state. If Vin' is less than the second threshold Vth2, the second port of the control circuit 104 generates an enable signal, to control the buck circuit 102 to discharge. That is, the control circuit 104 uses the buck circuit to supply power to the load circuit. This mode has low efficiency, but can stabilize an output voltage and ensure normal operation of the load circuit.

When the control circuit 104 controls the buck circuit to supply power to the load circuit, the control circuit 104 determines whether Vin' is greater than the first threshold Vth1 (for example, 7.2 V). If Vin' is greater than the first threshold Vth1, the third port of the control circuit 104 generates an enable signal, to control the charge pump circuit 103 to discharge. That is, the control circuit 104 uses the charge pump circuit 103 to supply power to the load circuit. In addition, the second port of the control circuit 104 generates an enable signal, to control the buck circuit 102 to stop supplying power to the load circuit. When the control circuit 104 controls the charge pump circuit 103 to supply power to the load circuit, the control circuit 104 determines whether Vin' is less than the second threshold Vth2 (for example, 7 V). If Vin' is less than the second threshold Vth2, the second port of the control circuit 104 generates an enable signal, to control the buck circuit 102 to discharge. That is, the control circuit 104 uses the buck circuit 102 to supply power to the load circuit. In addition, the third port of the control circuit 104 generates an enable signal, to control the charge pump circuit 103 to stop supplying power to the load circuit. Vth1 may be configured to be equal to Vth2, or Vth1 may be greater than Vth2.

It should be noted that the first threshold being not equal to the second threshold is intended to avoid switching from discharge of the buck circuit 102 to discharge of the charge pump circuit 103 or switching from discharge of the charge pump circuit 103 to discharge of the buck circuit 102 due to slight fluctuation of Vin'. In short, repeated switching is avoided.

It should be noted that, in the embodiment shown in FIG. 1a, the buck circuit 102 and the charge pump circuit 103 simultaneously supply power to the load circuit in a switching process, and after switching is completed, only one of the buck circuit 102 and the charge pump circuit 103 can be used to supply power to the load circuit. In the switching process, when switching from the buck circuit to the charge pump circuit is needed, the charge pump circuit is first started to supply power, and then the buck circuit is controlled to stop supplying power. Similarly, when switching from the charge pump circuit to the buck circuit is needed, the buck circuit is first started to supply power, and then the charge pump circuit is controlled to stop supplying power.

Optionally, the detection circuit 101, the buck circuit 102, the charge pump circuit 103, and the control circuit 104 may be integrated.

The control circuit 104 may be a processor or a power management chip inside the electronic device.

It should be noted that an output voltage of the charge pump circuit 103 may be half of an input voltage of the charge pump circuit 103, or may be set based on another proportion. Specifically, the output voltage of the charge pump circuit 103 may be set based on the input voltage of the charge pump circuit and a requirement of an input voltage of the load circuit connected to the output port of the charge pump circuit.

FIG. 1b is a schematic circuit diagram of a discharge circuit according to an embodiment of this application. An electronic device in which the discharge circuit is located has a battery and a charging circuit. The discharge circuit is a case in which a first port of a detection circuit in FIG. 1a is coupled to a positive electrode of a battery. As shown in FIG. 1b, the discharge circuit includes a detection circuit 101, a buck circuit 102, a charge pump circuit 103, and a control circuit 104. A negative electrode of the battery is coupled to ground, a positive electrode Vbat of the battery is coupled to a first port of a charging circuit 105, and a second port Vsys of the charging circuit 105 is coupled to a first port of the buck circuit 102 and a first port of the charge pump circuit 103. A second port of the charge pump circuit 103 and a second port of the buck circuit 102 are an output port of the discharge circuit. The discharge circuit is configured to supply power to an internal circuit (that is, a load circuit) of the electronic device in which the discharge circuit is located. A voltage Vsys of the first port of the buck circuit 102 and the first port of the charge pump circuit 103, that is, an input port, is the same as or close to Vbat.

A first port of the detection circuit 101 is coupled to the positive electrode of the battery, to detect a voltage Vbat of the positive electrode of the battery. The detection circuit 101 may be an ADC detection circuit. A second port of the detection circuit 101 is coupled to a first port of the control circuit 104, so that the control circuit 104 obtains the voltage Vbat of the battery. A second port and a third port of the control circuit 104 are respectively coupled to an enabling port of the buck circuit 102 and an enabling port of the charge pump circuit 103. The control circuit 104 is configured to control, based on the voltage of the battery, the buck circuit 102 and the charge pump circuit 103 to discharge.

That the control circuit 104 controls, based on the voltage Vbat of the battery detected by the detection circuit, the buck circuit 102 and the charge pump circuit 103 to discharge includes:

If Vbat is greater than a first threshold, the control circuit 104 controls the charge pump circuit 103 to discharge. If Vbat is less than a second threshold, the control circuit 104 controls the buck circuit 102 to discharge. The first threshold is greater than or equal to the second threshold.

Specifically, during initialization (for example, first startup), if Vbat is greater than the first threshold Vth1, the third port of the control circuit 104 generates an enable signal, to control the charge pump circuit 103 to supply power to the load circuit. That is, the control circuit 104 uses the charge pump circuit 103 to supply power to the load circuit. In this way, supplying power to the load circuit is ensured to be in a high efficiency state. If Vbat is less than the second threshold Vth2, the second port of the control circuit 104 generates an enable signal, to control the buck circuit 102 to discharge. That is, the control circuit 104 uses the buck circuit to supply power to the load circuit. This mode has low efficiency, but can stabilize an output voltage and ensure normal operation of the load circuit.

When the control circuit 104 controls the buck circuit to supply power to the load circuit, the control circuit 104 determines whether Vbat is greater than the first threshold Vth1 (for example, 7.2 V). If Vbat is greater than the first threshold Vth1, the third port of the control circuit 104 generates an enable signal, to control the charge pump circuit 103 to discharge. That is, the control circuit 104 uses the charge pump circuit 103 to supply power to the load circuit. In addition, the second port of the control circuit 104 generates an enable signal, to control the buck circuit 102 to stop supplying power to the load circuit. When the control circuit 104 controls the charge pump circuit 103 to supply power to the load circuit, the control circuit 104 determines whether Vbat is less than the second threshold Vth2 (for example, 7 V). If Vbat is less than the second threshold Vth2, the second port of the control circuit 104 generates an enable signal, to control the buck circuit 102 to discharge. That is, the control circuit 104 uses the buck circuit 102 to supply power to the load circuit. In addition, the third port of the control circuit 104 generates an enable signal, to control the charge pump circuit 103 to stop supplying power to the load circuit. Vth1 may be configured to be equal to Vth2, or Vth1 may be greater than Vth2.

It should be noted that the first threshold being not equal to the second threshold is intended to avoid switching from discharge of the buck circuit 102 to discharge of the charge pump circuit 103 or switching from discharge of the charge pump circuit 103 to discharge of the buck circuit 102 due to slight fluctuation of Vbat. In short, repeated switching is avoided.

The first threshold described in FIG. 1b may be the same as or different from the first threshold described in FIG. 1a, and the second threshold described in FIG. 1b may be the same as or different from the second threshold described in FIG. 1a.

During use of the battery, performance of the battery may change due to aging, a temperature, or the like. Optionally, that the control circuit 104 may control, based on a status of the battery, the buck circuit 102 and the charge pump circuit 103 to discharge may be specifically:

The control circuit 104 determines a switching voltage V based on the voltage of the battery, internal resistance of the battery, an aging degree of the battery, a current of the load circuit, and a temperature of the battery. If the switching voltage V is greater than a third threshold, the control circuit 104 controls the charge pump circuit 103 to discharge. If the switching voltage V is less than a fourth threshold, the control circuit 104 controls the buck circuit 102 to discharge. For a control process of the control circuit 104, refer to related descriptions in FIG. 1a and FIG. 1b. Details are not described herein. The third threshold is greater than or equal to the fourth threshold. The third threshold may be equal to the first threshold, or may not be equal to the first threshold. The fourth threshold may be equal to the second threshold, or may not be equal to the second threshold.

The control circuit does not directly compare the voltage of the battery with a threshold, but calculates the switching voltage based on the voltage of the battery and the status of the battery, and then compares the switching voltage with the threshold.

That the control circuit 104 determines the switching voltage V based on the voltage of the battery, the internal resistance of the battery, the aging degree of the battery, and the current of the load circuit includes:

The control circuit 104 determines the switching voltage V based on a preset formula, the voltage of the battery, the internal resistance of the battery, the aging degree of the battery, the current of the load circuit, and the temperature of the battery. The preset formula is V=Vbat-I*η*R(T), where Vbat is the voltage of the battery, R(T) is the internal resistance of the battery, T is the temperature of the battery, η is the aging degree of the battery, and I is the current of the load circuit.

It should be noted that the internal resistance of the battery is related to the temperature of the battery. The internal resistance of the battery may be determined by measuring the temperature of the battery. Therefore, the internal resistance of the battery may be expressed as R(T).

Optionally, the control circuit 104 may determine the switching voltage V based on the voltage of the battery and at least one of the internal resistance of the battery, the aging degree of the battery, the current of the load circuit, and the temperature of the battery.

Optionally, that the control circuit 104 may control, based on a status of the battery, the buck circuit 102 and the charge pump circuit 103 to discharge may alternatively be:

The control circuit 104 determines a fifth threshold and a sixth threshold based on at least one of battery statuses such as the internal resistance of the battery, the aging degree of the battery, the current of the load circuit, and the temperature of the battery. If the voltage (for example, Vbat or Vin in FIG. 1a, or Vbat in FIG. 1b) detected by the detection circuit is greater than the fifth threshold, the control circuit 104 controls the charge pump circuit 103 to discharge. If the voltage detected by the detection circuit is less than the sixth threshold, the control circuit 104 controls the buck circuit 102 to discharge. For a control process of the control circuit 104, refer to related descriptions in FIG. 1a and FIG. 1b. Details are not described herein. The fifth threshold is greater than or equal to the sixth threshold. The fifth threshold may be calculated based on the first threshold and the status of the battery, for example, the fifth threshold Vth5=Vth1-I*η*R(T). The sixth threshold may be calculated based on the first threshold and the status of the battery, for example, the sixth threshold Vth6=Vth2-I*η*R(T).

That is, the fifth threshold and the sixth threshold vary with the status of the battery, and the control circuit controls, based on comparison between the voltage of the battery and the calculated fifth threshold and sixth threshold, the buck circuit and the charge pump circuit to discharge.

Optionally, the detection circuit 101 and the charging circuit 105 are integrated.

Optionally, the detection circuit 101 and the control circuit 104 are integrated.

Optionally, the charging circuit 105, the detection circuit 101, the buck circuit 102, the charge pump circuit 103, and the control circuit 104 are integrated.

Optionally, the buck circuit 102 and the charge pump circuit 103 are integrated.

When the charging circuit 105 does not work, the first port and the second port of the charging circuit 105 may be directly coupled, or coupled by using some electronic components. When the charging circuit 105 is connected to an external charger and the battery is fully charged, currents at input ports of the buck circuit 102 and the charge pump circuit 103 are supplied by the charging circuit 105. When the charging circuit 105 is connected to an external charger and the battery is not fully charged, a part of a current of the charging circuit 105 is supplied to the buck circuit 102 or the charge pump circuit 103, to supply power to the load circuit, and a part of the current is supplied to the battery, to charge the battery.

It should be noted that when the charging circuit 105 works or does not work, voltages of the first port and the second port of the charging circuit 105 are approximately equal. Therefore, the first port of the detection circuit 101 may alternatively be coupled to the second port of the charging circuit 105.

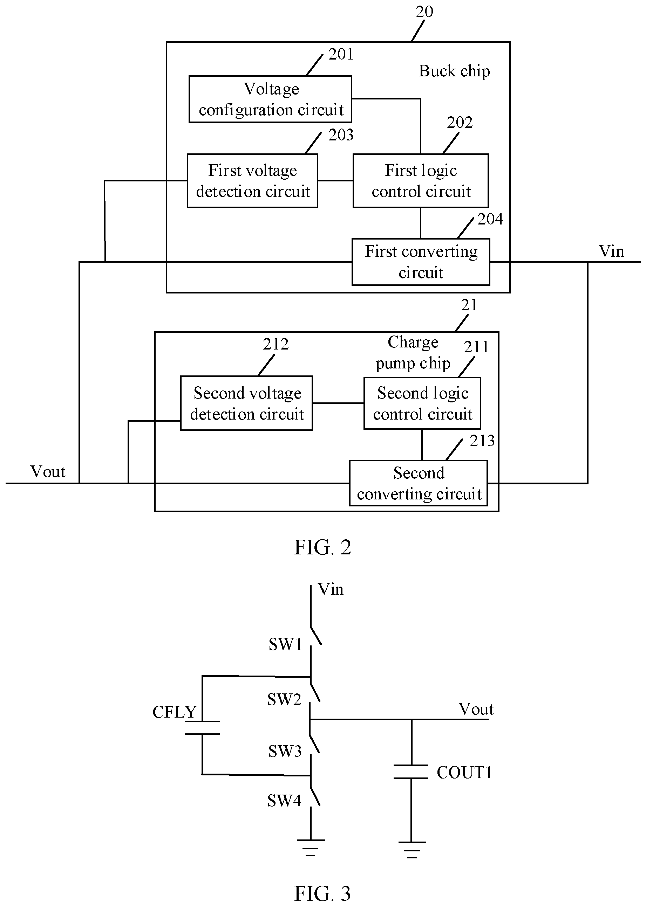

FIG. 2 is a schematic circuit diagram of another discharge circuit according to an embodiment of this application. As shown in FIG. 2, the discharge circuit includes a battery, a buck chip 20, and a charge pump chip 21.

An input port of the buck chip 20 and an input port of the charge pump chip 21 are connected to serve as an input port of the discharge circuit, which may be coupled to a positive electrode of the battery or an output port of a charging circuit. A voltage of the input port of the discharge circuit is Vin. An output port of the charge pump chip 21 and an output port of the buck chip are an output port of the discharge circuit, and an output voltage of the output port of the discharge circuit is Vout. The discharge circuit is configured to supply power to an internal circuit (that is, a load circuit) of an electronic device in which the discharge circuit is located.

Specifically, the buck chip 20 includes a voltage configuration circuit 201, a first logic control circuit 202, a first voltage detection circuit 203, and a first converting circuit 204 (that is, a buck circuit). The charge pump chip 21 includes a second logic control circuit 211, a second voltage detection circuit 212, and a second converting circuit 213 (that is, a charge pump circuit).

A configuration port of the voltage configuration circuit 201 is coupled to a first port of the first logic control circuit, a second port of the first logic control circuit 202 is coupled to a first port of the first voltage detection circuit 203, a third port of the first logic control circuit 202 is coupled to a first port of the first converting circuit 204, and a second port of the first voltage detection circuit 203 is coupled to the output port of the buck chip 20. A third port of the first converting circuit 204 is the input port of the buck chip 20, and a second port of the first converting circuit 204 is the output port of the buck chip 20.

A first port of the second logic control circuit 211 is coupled to a first port of the second voltage detection circuit 212, a second port of the second logic control circuit 211 is coupled to a first port of the second converting circuit 213, and a second port of the second voltage detection circuit 203 is coupled to the output port of the charge pump chip 21. A third port of the second converting circuit 213 is the input port of the charge pump chip 21, and a second port of the second converting circuit 213 is the output port of the charge pump chip 21.

The voltage configuration circuit 201 sets a configured voltage of the buck chip 20, and is configured to control an output voltage of the buck chip to be the configured voltage. The first voltage detection circuit 203 is configured to detect Vout in real time. Similarly, the second voltage detection circuit 212 is configured to detect Vout in real time. The real-time detection herein may be understood as performing detection in a very short period. The first voltage detection circuit and the second voltage detection circuit may be implemented by using a comparator circuit. One input end of the comparator circuit is the output voltage Vout of the discharge circuit, and another input end is a voltage to be compared, such as the configured voltage, or a voltage to be output by the second converting circuit. It should be explained herein that when the first converting circuit 204 works, an output voltage of the first converting circuit 204 is the output voltage of the buck chip 20, that is, the output voltage Vout of the discharge circuit. When the second converting circuit 213 works, an output voltage of the second converting circuit 213 is an output voltage of the charge pump chip 21, that is, the output voltage Vout of the discharge circuit. In a discharge process, there may be a case in which the buck chip and the charge pump chip simultaneously discharge. In this case, the output voltage Vout of the discharge circuit is a higher one between the output voltage of the buck chip and the output voltage of the charge pump chip. When the charge pump chip 21 supplies power to the load circuit, if the first logic control circuit 202 determines that the configured voltage is greater than the output voltage Vout of the discharge circuit detected by the first voltage detection circuit 203 (in this case, the output voltage Vout of the discharge circuit is the output voltage of the second converting circuit 213), the first logic control circuit 202 controls the first converting circuit 204 to work. When the first converting circuit 204 works, the output voltage of the first converting circuit 204 is the configured voltage. Because the output voltage of the first converting circuit 204 is higher than the output voltage of the second converting circuit, in this case, the output voltage Vout of the discharge circuit is the output voltage of the first converting circuit 204. If the second logic control circuit determines, based on the output voltage Vout of the discharge circuit detected by the second voltage detection circuit, that the output voltage of the second converting circuit is less than the output voltage Vout of the discharge circuit at this time, the second logic control circuit controls the charge pump chip 21 to be in a low power state or controls the second converting circuit 213 to stop conversion. When the buck chip 20 supplies power to the load circuit, if the second logic control circuit 211 determines that a voltage that can be output by the second converting circuit 213 is greater than the output voltage Vout of the discharge circuit (in this case, the output voltage Vout of the discharge circuit is the output voltage of the first converting circuit 204), the second converting circuit 213 is started to work. When the second converting circuit works, because the output voltage of the second converting circuit 213 is greater than the output voltage of the first converting circuit, in this case, the output voltage Vout of the discharge circuit is the output voltage of the second converting circuit, and in this case, the first logic control circuit determines that the output voltage Vout of the discharge circuit is greater than the configured voltage. Therefore, the first logic control circuit 202 controls the buck chip 20 to be in a low power state or controls the first converting circuit 204 to stop conversion. The output voltage of the charge pump chip is related to an input voltage Vin. For example, the output voltage of the charge pump circuit chip may be pre-designed as half of the input voltage Vin (an actual output voltage may be slightly different from half of the input voltage Vin). When the buck chip 20 supplies power to the load circuit, if the second logic control circuit 211 determines that a voltage (Vin/2) that can be output by the second converting circuit 213 is greater than the output voltage of the buck chip, the charge pump chip 21 is started to supply power to the load circuit. If the first logic control circuit 202 determines that the output voltage of the discharge circuit is greater than the configured voltage, the first logic control circuit 202 controls the buck chip 20 to be in a low power state.

It should be noted that the buck chip and the charge pump chip provide quick transient response, and supplying power to the load circuit is not affected when switching between the buck chip and the charge pump chip is performed. In addition, when one chip supplies power to the load circuit, the other chip does not greatly affect the supplying power to the load circuit. That is, a current supplied by one chip to the load circuit does not flow to the other chip, or only a small part of the current flows to the other chip.

FIG. 3 is a schematic circuit diagram of a charge pump circuit according to an embodiment of this application. The charge pump circuit may be applied to the charge pump circuit in FIG. 1a and FIG. 1b and the second converting circuit 213 in FIG. 2. The charge pump (charge pump) circuit is a DC-DC (direct current-direct current) converting circuit that uses energy stored in a capacitor to perform voltage conversion (for details, refer to https://en.wikipedia.org/wiki/Charge_pump).

As shown in FIG. 3, the charge pump circuit includes a first switch SW1, a second switch SW2, a third switch SW3, a fourth switch SW4, an external capacitor CFLY, and a first output capacitor COUT1.

A first port of the first switch SW1 is an input port of the charge pump circuit, a second port of the first switch SW1 is coupled to a first port of the second switch SW2, a second port of the second switch SW2 is coupled to a first port of the third switch SW3, a second port of the third switch SW3 is coupled to a first port of the fourth switch SW4, and a second port of the fourth switch SW4 is coupled to ground. A first port of the external capacitor CFLY is coupled to the first port of the second switch SW2. A second port of the external capacitor CFLY is coupled to the second port of the third switch. A first port of the first output capacitor COUT1 is coupled to the second port of the second switch SW2, and a second port of the first output capacitor COUT1 is coupled to the ground. The first port of the first output capacitor COUT1 is an output port of the charge pump circuit.

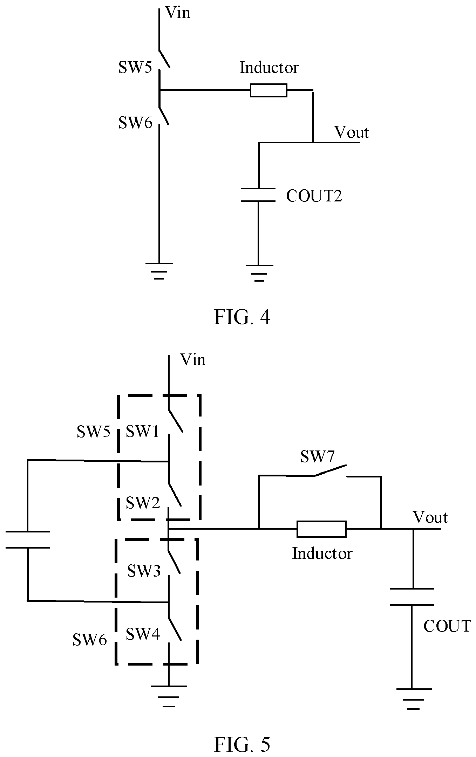

FIG. 4 is a schematic circuit diagram of a buck circuit according to an embodiment of this application. The buck circuit may be applied to the buck circuit in FIG. 1a and FIG. 1b and the first converting circuit 204 in FIG. 2. The buck circuit (that is, a buck converter) is a DC-DC (direct current-direct current) converting circuit with an output voltage lower than an input voltage (for details, refer to https://en.wikipedia.org/wiki/Buck_converter). As shown in FIG. 4, the buck circuit includes a fifth switch, a sixth switch, an inductor, and a second output capacitor COUT2.

A first port of the fifth switch SW5 is an input port of the buck circuit, a second port of the fifth switch SW5 is coupled to a first port of the sixth switch SW6, and a second port of the sixth switch SW6 is coupled to ground. The second port of the fifth switch SW5 is coupled to a first port of the inductor, a second port of the inductor is coupled to a first port of the second output capacitor COUT2, and a second port of the second output capacitor COUT2 is coupled to the ground. The first port of the second output capacitor COUT2 is an output port of the buck circuit.

It can be learned from FIG. 3 and FIG. 4 that switches exist in both the charge pump circuit and the buck circuit, the two (that is, the charge pump circuit and the buck circuit) are integrated into one chip, and the switches may be shared, to achieve an objective of reducing costs. A circuit in which the charge pump circuit and the buck circuit are integrated may be referred to as an integrated circuit.

FIG. 5 is a schematic diagram of an integrated circuit of a charge pump circuit and a buck circuit. As shown in FIG. 5, the integrated circuit includes a first switch SW1, a second switch SW2, a third switch SW3, a fourth switch SW4, a seventh switch SW7, an inductor, an external capacitor CFLY, and an output capacitor COUT.

A first port of the first switch SW1 is an input port of the integrated circuit (that is, an input port of the charge pump circuit and an input port of the buck circuit), a second port of the first switch SW1 is coupled to a first port of the second switch SW2, a second port of the second switch SW2 is coupled to a first port of the third switch SW3, a second port of the third switch SW3 is coupled to a first port of the fourth switch SW4, and a second port of the fourth switch SW4 is coupled to ground. A first port of the external capacitor CFLY is coupled to the first port of the second switch SW2, and a second port of the external capacitor CFLY is coupled to the second port of the third switch SW3. A first port of the inductor is coupled to the first port of the third switch SW3, a second port of the inductor is coupled to a first port of the output capacitor COUT, and a second port of the output capacitor COUT is coupled to the ground. A first port of the seventh switch SW7 is coupled to the first port of the inductor, and a second port of the seventh switch SW7 is coupled to the second port of the inductor. The first port of the output capacitor COUT is an output port of the integrated circuit (that is, an output port of the charge pump circuit and an output port of the buck circuit).

It should be noted that, for the buck circuit, a circuit formed by connecting the first switch SW1 and the second switch SW2 in series in the integrated circuit shown in FIG. 5 may be equivalent to a fifth switch SW5 in the buck circuit, and a circuit formed by connecting the third switch SW3 and the fourth switch SW4 in series in the integrated circuit shown in FIG. 5 may be equivalent to a sixth switch SW6 in the buck circuit.

When the integrated circuit serves as the buck circuit, the seventh switch SW7 is opened. When the integrated circuit serves as the charge pump circuit, the seventh switch SW7 is closed.

The switches in FIG. 3 to FIG. 5 have control ends, which are connected to a control and drive module, and the control and drive module controls the switches to be closed.

It should be noted that functions of the switches in FIG. 3 and FIG. 4 may be implemented by MOS transistors. Briefly, the switches in FIG. 3 and FIG. 4 may be replaced with MOS transistors.

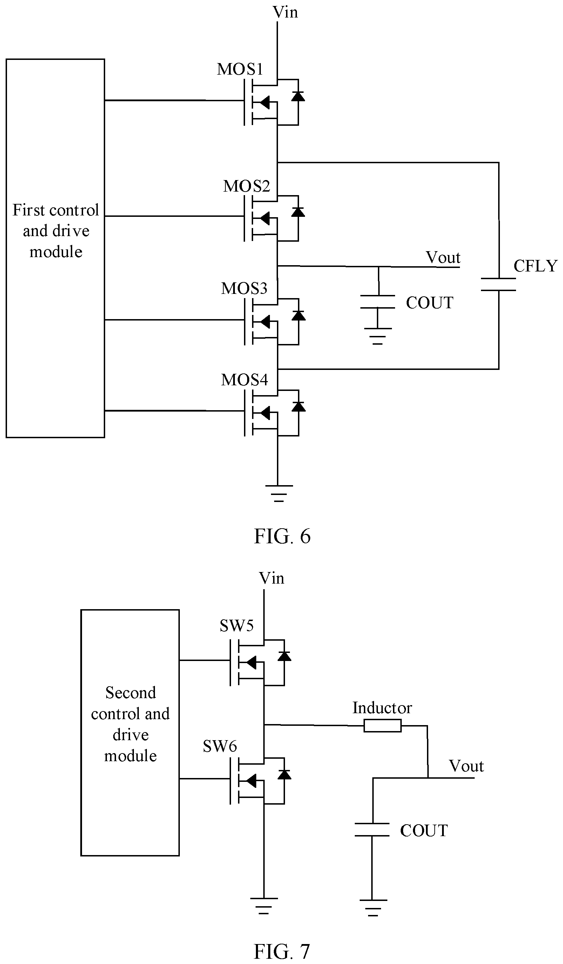

FIG. 6 is a schematic circuit diagram of another charge pump circuit according to an embodiment of this application. As shown in FIG. 6, the charge pump circuit includes a first control and drive module, a first MOS transistor MOS 1, a second MOS transistor MOS2, a third MOS transistor MOS3, a fourth MOS transistor MOS4, an external capacitor CFLY, and a first output capacitor COUT1.

A drain electrode of the first MOS transistor MOS1 is an input port of the charge pump circuit, a source electrode of the first MOS transistor MOS1 is coupled to a drain electrode of the second MOS transistor MOS2, a source electrode of the second MOS transistor MOS2 is coupled to a drain electrode of the third MOS transistor MOS3, a source electrode of the third MOS transistor MOS3 is coupled to a drain electrode of the fourth MOS transistor MOS4, and a source electrode of the fourth MOS transistor MOS4 is coupled to ground. A first port of the external capacitor CFLY is coupled to the drain electrode of the second MOS transistor MOS2. A second port of the external capacitor CFLY is coupled to the source electrode of the third MOS transistor MOS3. A first port of the first output capacitor COUT1 is coupled to the source electrode of the second MOS transistor MOS2, and a second port of the first output capacitor COUT1 is coupled to the ground. The first port of the first output capacitor COUT1 is an output port of the charge pump circuit.

A gate electrode of the first MOS transistor MOS1, a gate electrode of the second MOS transistor MOS2, a gate electrode of the third MOS transistor MOS3, and a gate electrode of the fourth MOS transistor MOS4 are all connected to the first control and drive module. The first control and drive module implements connection and disconnection of the MOS transistors by controlling voltages of the gate electrode of the first MOS transistor MOS1, the gate electrode of the second MOS transistor MOS2, the gate electrode of the third MOS transistor MOS3, and the gate electrode of the fourth MOS transistor MOS4.

It should be noted that all MOS transistors and the first control and drive module shown in FIG. 6 may be integrated into one chip.

FIG. 7 is a schematic circuit diagram of another buck circuit according to an embodiment of this application. As shown in FIG. 7, the buck circuit includes a second control and drive module, a fifth MOS transistor MOS5, a sixth MOS transistor MOS6, an inductor, and a second output capacitor COUT2.

A drain electrode of the fifth MOS transistor MOS5 is an input port of the buck circuit, a source electrode of the fifth MOS transistor MOS5 is coupled to a drain electrode of the sixth MOS transistor MOS6, and a drain electrode of the sixth MOS transistor MOS6 is coupled to ground. The source electrode of the fifth MOS transistor MOS5 is coupled to a first port of the inductor, a second port of the inductor is coupled to a first port of the second output capacitor COUT2, and a second port of the second output capacitor COUT2 is coupled to the ground. The first port of the second output capacitor COUT2 is an output port of the buck circuit.

Gate electrodes of the fifth MOS transistor MOS5 and the sixth MOS transistor MOS6 are both connected to the second control and drive module. The second control and drive module implements connection and disconnection of the MOS transistors by controlling voltages of the gate electrodes of the fifth MOS transistor MOS5 and the sixth MOS transistor MOS6.

It should be noted that all MOS transistors and the second control and drive module shown in FIG. 7 may be integrated into one chip.

It should be noted that functions of the switches in FIG. 5 and FIG. 6 may be implemented by MOS transistors. Briefly, the switches in FIG. 5 and FIG. 6 may be replaced with MOS transistors.

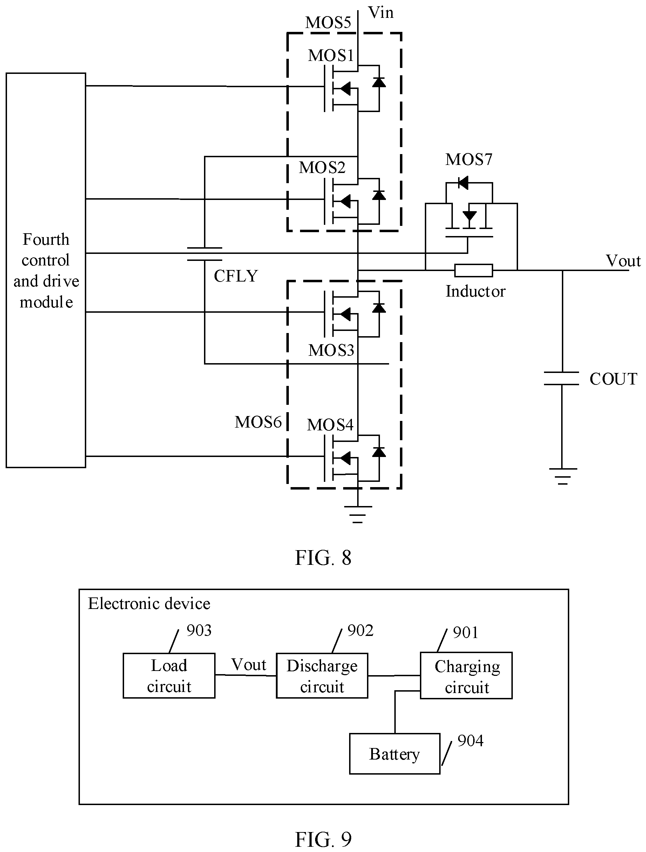

FIG. 8 is a schematic diagram of another integrated circuit of a charge pump circuit and a buck circuit. As shown in FIG. 8, the integrated circuit includes a first MOS transistor MOS 1, a second MOS transistor MOS2, a third MOS transistor MOS3, a fourth MOS transistor MOS4, a seventh MOS transistor MOS7, an inductor, an external capacitor CFLY, and an output capacitor COUT.

A drain electrode of the first MOS transistor MOS1 is an input port of the integrated circuit (that is, an input port of the charge pump circuit and an input port of the buck circuit), a source electrode of the first MOS transistor MOS1 is coupled to a drain electrode of the second MOS transistor MOS2, a source electrode of the second MOS transistor MOS2 is coupled to a drain electrode of the third MOS transistor MOS3, a source electrode of the third MOS transistor MOS3 is coupled to a drain electrode of the fourth MOS transistor MOS4, and a source electrode of the fourth MOS transistor MOS4 is coupled to ground. A first port of the external capacitor CFLY is coupled to the drain electrode of the second MOS transistor MOS2, and a second port of the external capacitor CFLY is coupled to the source electrode of the third MOS transistor MOS3. A first port of the inductor is coupled to the source electrode of the second MOS transistor MOS2, a second port of the inductor is coupled to a first port of the output capacitor COUT, and a second port of the output capacitor COUT is coupled to the ground. A drain electrode of the seventh MOS transistor MOS7 is coupled to the first port of the inductor, and a source electrode of the seventh MOS transistor MOS7 is coupled to the second port of the inductor. The first port of the output capacitor COUT is an output port of the integrated circuit (that is, an output port of the charge pump circuit and an output port of the buck circuit).

Voltages of a gate electrode of the first MOS transistor MOS1, a gate electrode of the second MOS transistor MOS2, a gate electrode of the third MOS transistor MOS3, a gate electrode of the fourth MOS transistor MOS4, and a gate electrode of the seventh MOS transistor MOS7 are all controlled by a third control and drive module. The third control and drive module implements connection and disconnection of the MOS transistors by controlling the voltages of the gate electrode of the first MOS transistor MOS1, the gate electrode of the second MOS transistor MOS2, the gate electrode of the third MOS transistor MOS3, the gate electrode of the fourth MOS transistor MOS4, and the gate electrode of the seventh MOS transistor MOS7.

It should be noted that, for the buck circuit, a circuit formed by connecting the first MOS transistor MOS 1 and the second MOS transistor MOS2 in series in the integrated circuit shown in FIG. 8 may be equivalent to a fifth MOS transistor MOS5 in the buck circuit, and a circuit formed by connecting the third MOS transistor MOS3 and the fourth MOS transistor MOS4 in series in the integrated circuit shown in FIG. 8 may be equivalent to a sixth MOS transistor MOS6 in the buck circuit.

When the integrated circuit serves as the buck circuit, the seventh MOS transistor is disconnected, and a current is transmitted through the inductor. When the integrated circuit serves as the charge pump circuit, the seventh MOS transistor short-circuits the inductor.

It should be noted that the discharge circuit described in this application is used inside an electronic device to supply power to a load circuit inside the electronic device. FIG. 9 is a schematic circuit diagram of an electronic device according to an embodiment of this application. As shown in FIG. 9, the electronic device includes a charging circuit 901, a discharge circuit 902, a load circuit 903, and a battery 904 (for example, a battery formed by connecting two lithium batteries in parallel). An output port of the discharge circuit 902 is coupled to an input port of the load circuit 903, and an input port of the discharge circuit 902 is coupled to an output port of the charging circuit 901, so that the discharge circuit supplies power to the load circuit. Another output port of the charging circuit 901 is connected to the battery 904. When the charging circuit 901 is connected to an external charger for charging by using an interface, the external charger supplies an input voltage to the discharge circuit 902 by using the charging circuit or by using the charging circuit and the battery 904. When the charging circuit 901 is not connected to an external charger, the battery 904 supplies an input voltage to the discharge circuit 902.

The load circuit 903 is a power consumption circuit inside the electronic device. If the electronic device is a mobile phone, the load circuit is a circuit including power consumption components, and the power consumption components include a CPU, a memory, a display, a sensor, a baseband chip, a radio frequency circuit, and the like.

The embodiments of this application are described in detail above. The principle and implementation of this application are described herein through specific examples. The description about the embodiments of this application is merely provided to help understand the method and core ideas of this application. In addition, persons of ordinary skill in the art can make variations and modifications to this application in terms of the specific implementations and application scopes according to the ideas of this application. Therefore, the content of this specification shall not be construed as a limit to this application.

## Claims

1. A discharge circuit, wherein the discharge circuit is used inside an electronic device to supply power to a load circuit inside the electronic device, and comprises a detection circuit, a buck circuit, a charge pump circuit, and a control circuit;
an input port of the buck circuit is coupled to an input port of the charge pump circuit, and the input port of the buck circuit and the input port of the charge pump circuit are an input port of the discharge circuit; an output port of the charge pump circuit is coupled to an output port of the buck circuit, and the output port of the charge pump circuit and the output port of the buck circuit are an output port of the discharge circuit; the output port of the discharge circuit is coupled to an input port of the load circuit inside the electronic device;
a first port of the detection circuit is coupled to the input port of the discharge circuit, a second port of the detection circuit is coupled to a first port of the control circuit, and a second port and a third port of the control circuit are respectively coupled to an enabling port of the buck circuit and an enabling port of the charge pump circuit;
the detection circuit is configured to detect a voltage of the first port of the detection circuit; and
the control circuit is configured to control, based on the voltage of the first port of the detection circuit, the buck circuit and the charge pump circuit to discharge.

2. The discharge circuit according to claim 1, wherein that the control circuit controls, based on the voltage of the first port of the detection circuit, the buck circuit and the charge pump circuit to discharge comprises:
if the voltage of the first port of the detection circuit is greater than a first threshold, the control circuit controls the charge pump circuit to discharge; and
if the voltage of the first port of the detection circuit is less than a second threshold, the control circuit controls the buck circuit to discharge, wherein
the first threshold is greater than or equal to the second threshold.

3. The discharge circuit according to claim 1, wherein the electronic device further comprises a battery, a negative electrode of the battery is coupled to ground, and a positive electrode of the battery is coupled to the input port of the discharge circuit;
the control circuit further determines a switching voltage V based on a voltage of the battery, internal resistance of the battery, an aging degree of the battery, and a current of the load circuit;
if the switching voltage V is greater than a third threshold, the control circuit controls the charge pump circuit to discharge; and
if the switching voltage V is less than a fourth threshold, the control circuit controls the buck circuit to discharge, wherein
the third threshold is greater than or equal to the fourth threshold.

4. The discharge circuit according to claim 3, wherein the switching voltage V is:
V=Vbat-I*η*R(T), wherein Vbat is the voltage of the battery, R(T) is the internal resistance of the battery, T is a temperature of the battery, η is the aging degree of the battery, and I is the current of the load circuit.

5. The discharge circuit according to any one of claims 1 to 4, wherein the electronic device further comprises the battery and a charging circuit, wherein
the first port of the detection circuit is coupled to the positive electrode of the battery or a first output port of the charging circuit; and the negative electrode of the battery is coupled to the ground, and the positive electrode of the battery is coupled to a second output port of the charging circuit.

6. The discharge circuit according to any one of claims 1 to 5, wherein the buck circuit and the charge pump circuit are integrated.

7. The discharge circuit according to claim 6, wherein the buck circuit and the charge pump circuit are integrated and comprise a first switch, a second switch, a third switch, a fourth switch, a seventh switch, an inductor, an external capacitor, and an output capacitor; and
a first port of the first switch is the input port of the charge pump circuit and the input port of the buck circuit, a second port of the first switch is coupled to a first port of the second switch, a second port of the second switch is coupled to a first port of the third switch, a second port of the third switch is coupled to a first port of the fourth switch, and a second port of the fourth switch is coupled to the ground; a first port of the external capacitor is coupled to the first port of the second switch, and a second port of the external capacitor is coupled to the second port of the third switch; a first port of the inductor is coupled to the first port of the third switch, a second port of the inductor is coupled to a first port of the output capacitor, and a second port of the output capacitor is coupled to the ground; a first port of the seventh switch is coupled to the first port of the inductor, and a second port of the seventh switch is coupled to the second port of the inductor; and the first port of the output capacitor is the output port of the charge pump circuit and the output port of the circuit.

8. A discharge circuit, comprising a buck chip and a charge pump chip, wherein
an input port of the buck chip is coupled to an input port of the charge pump chip, an output port of the buck chip is coupled to an output port of the charge pump chip, the input port of the buck chip is an input port of the discharge circuit, and the output port of the buck chip is an output port of the discharge circuit; and
both the buck chip and the charge pump chip detect an output voltage of the output port of the discharge circuit; when the buck chip works, if a voltage to be output by the charge pump chip is greater than the output voltage of the output port of the discharge circuit, the charge pump chip discharges, and when the buck chip detects that the output voltage of the output port of the discharge circuit is greater than a configured voltage of the buck chip, the buck chip enters a low power state; and when the charge pump chip works, if the output voltage of the output port of the discharge circuit is less than the configured voltage of the buck chip, the buck chip discharges, and when the charge pump chip detects that the output voltage of the output port of the discharge circuit is greater than an output voltage of the charge pump chip, the charge pump chip enters a low power state.

9. The method according to claim 8, wherein the buck chip comprises a voltage configuration circuit, a first logic control circuit, a first voltage detection circuit, and a first converting circuit; the charge pump chip comprises a second logic control circuit, a second voltage detection circuit, and a second converting circuit;
the voltage configuration circuit is configured to set the configured voltage of the buck chip;
the first voltage detection circuit and the second voltage detection circuit are separately configured to detect the output voltage of the discharge circuit;
when the second converting circuit works, if the first logic control circuit determines that the configured voltage is greater than the output voltage of the discharge circuit, the first logic control circuit controls the first converting circuit to work, and if the second logic control circuit determines that an output voltage of the second converting circuit is less than the output voltage of the discharge circuit, the second logic control circuit controls the second converting circuit to stop voltage conversion; and
when the first converting circuit works, if the second logic control circuit determines that a voltage that can be output by the second converting circuit is greater than the output voltage of the discharge circuit, the second logic control circuit controls the second converting circuit to work, and if the first logic control circuit determines that the output voltage of the discharge circuit is greater than the configured voltage, the first logic control circuit controls the first converting circuit to stop voltage conversion.

10. The discharge circuit according to claim 9, wherein the first converting circuit and the second converting circuit are integrated and comprise a first switch, a second switch, a third switch, a fourth switch, a seventh switch, an inductor, an external capacitor, and an output capacitor; and
a first port of the first switch is the input port of the charge pump circuit and the input port of the buck circuit, a second port of the first switch is coupled to a first port of the second switch, a second port of the second switch is coupled to a first port of the third switch, a second port of the third switch is coupled to a first port of the fourth switch, and a second port of the fourth switch is coupled to ground; a first port of the external capacitor is coupled to the first port of the second switch, and a second port of the external capacitor is coupled to the second port of the third switch; a first port of the inductor is coupled to the first port of the third switch, a second port of the inductor is coupled to a first port of the output capacitor, and a second port of the output capacitor is coupled to the ground; a first port of the seventh switch is coupled to the first port of the inductor, and a second port of the seventh switch is coupled to the second port of the inductor; and the first port of the output capacitor is the output port of the charge pump circuit and the output port of the circuit.

11. An electronic device, comprising a load circuit and the discharge circuit according to any one of claims 1 to 10.
